# EUROPÄISCHE PATENTSCHRIFT

(11) **EP 2 478 671 B1**
(45) Veröffentlichungstag und Bekanntmachung des Hinweises auf die Patenterteilung: **17.12.2014**
(21) Anmeldenummer: 10763148.3
(22) Anmeldetag: 15.09.2010
(51) Int. Cl.: H04L 12/40

(54) **VERFAHREN UND VORRICHTUNG ZUM AUFWECKEN VON TEILNEHMERN EINES BUSSYSTEMS UND ENTSPRECHENDER TEILNEHMER**
METHOD AND DEVICE FOR WAKING UP CONSUMERS IN A BUS SYSTEM AND CORRESPONDING CONSUMERS
PROCÉDÉ ET DISPOSITIF POUR ACTIVER DES DISPOSITIFS UTILISATEURS D'UN SYSTÈME DE BUS ET DISPOSITIF UTILISATEUR CORRESPONDANT

(30) Priorität: 16.09.2009 DE 102009041434
(43) Veröffentlichungstag der Anmeldung: 25.07.2012
(73) Patentinhaber: Robert Bosch GmbH, 70442 Stuttgart (DE)
(72) Erfinder: HARTWICH, Florian, 72762 Reutlingen (DE)
(86) Internationale Anmeldenummer: PCT/EP2010/063534
(87) Internationale Veröffentlichungsnummer: WO 2011/032977

(56) Entgegenhaltungen:
- EP-A1- 1 858 206
- EP-A2- 1 351 433
- DE-A1- 10 358 584
- FR-A3- 2 917 555

## Beschreibung

### Stand der Technik

Die Erfindung geht aus von einem Verfahren und einer Vorrichtung zum Aufwecken von Teilnehmern eines Bussystems sowie einem entsprechenden Teilnehmer gemäß den Oberbegriffen der unabhängigen Ansprüche.

Steuergeräte im Kraftfahrzeug werden in zunehmendem Maße dauerhaft mit Spannung versorgt (auch Klemme 30-Fähigkeit genannt), um auch bei ausgeschalteter Zündung gewisse Überwachungs- und Steuerfunktionen ausführen zu können. Dies kann z. B. eine Zugangs- und Fahrberechtigung oder der Diagnosefall sein. Zur Reduzierung des Stromverbrauchs werden die Steuergeräte in einen sogenannten Schlafmodus oder Sleepmode gebracht. Dies geschieht entweder durch Abschalten des Spannungsreglers oder durch Eintritt in einen entsprechenden Betriebsmodus des Mikrocontrollers.

Bei Bedarf muss das Steuergerät aufgeweckt werden. Dies geschieht entweder über eine dafür vorgesehene Leitung zu einem Weckeingang des Mikrocontrollers des Teilnehmers oder zu einem Weckeingang des Spannungsreglers. Bei den heute üblicherweise vernetzten Systemen kann dies auch durch eine Aktivität auf den Busleitungen erfolgen.

Nachteilig daran ist, dass entweder zu allen benötigten Steuergeräten eine separate Weckleitung verlegt werden muss oder bei Wecken über den Bus alle, auch die nicht benötigten Steuergeräte durch eine gewollte oder ungewollte Busaktivität, entweder durch Kommunikation auf dem Bus oder Störung auf dem Bus geweckt werden.

Heutige CAN-Transceiver können im wesentlichen in zwei Modi betrieben werden, in dem aktiven Modus für die Kommunikation und in dem Sleep-Modus für den stromsparenden Ruhezustand. Das Applikations-Programm kann den gewünschten Betriebmodus einstellen, der Transceiver wechselt auch, insbesondere automatisch vom Sleep-Modus in den aktiven Modus, sobald er auf dem CAN-Bus ein Signal oder eine Signaleigenschaft z.B. ein dominantes Bit erkennt. Während der Transceiver im Sleep-Modus ist, kann der Rest des CAN-Knotens abgeschaltet sein und wird dann wieder eingeschaltet, wenn der CAN-Transceiver in den aktiven Modus wechselt.

Die DE 103 58 584 A1 beschreibt ein Verfahren, wie ein CAN-Transceiver durch eine Schaltung erweitert wird, die 8 bit lange Muster aus einem 8 byte langen Data-Field einer CAN-Botschaft dekodiert. Dadurch kann der CAN-Transceiver in vier Modi betrieben werden. Zusätzlich zu den vorher beschriebenen Modi kommen noch ein weiterer Spar-Modus und ein Zwischen-Modus. Aus dem Sleep-Modus wechselt der Transceiver automatisch in den Spar-Modus, sobald er auf dem CAN-Bus ein dominantes Bit erkennt. Im Spar-Modus erfasst er eine Signaleigenschaft und wechselt in den Zwischen-Modus, wenn er innerhalb einer vorgegebenen Zeitspanne eine Anzahl von Signaleigenschaften, beispielsweise Flanken, erkennt. Aus dem Zwischen-Modus wechselt er erst dann in den aktiven Modus, sobald er in dem 8 byte langen Datenfeld der erneut versendeten CAN-Botschaft, das er hierzu nach einem spezifischen Verfahren dekodiert, ein bestimmtes Muster erkennt. Dieses Weck-Muster wird für jeden CAN-Transceiver getrennt konfiguriert. Der CAN-Identifier dieser Botschaft wird für dieses Verfahren fest vorgegeben. Wenn er das Weck-Muster in dieser Botschaft nicht erkennt, geht er in den Spar-Modus zurück. Im Zwischen-Modus ist der Stromverbrauch nur geringfügig höher als im Spar-Modus, der Rest des CAN-Knotens kann abgeschaltet bleiben. Dadurch werden CAN-Netzwerke möglich, in denen einzelne Knoten kontrolliert im stromsparenden Spar-Modus verbleiben, während die anderen Knoten über den CAN-Bus kommunizieren. Die einzelnen Knoten können selektiv aus dem Spar-Modus aufgeweckt werden. Dies wird auch selektiver Wakeup genannt.

Somit ist es möglich über den in Kraftfahrzeugen verwendeten Bus, insbesondere einen CAN-Bus nur die Steuergeräte selektiv zu wecken, die zur Erfüllung der benötigten Funktionen gebraucht werden.

Aufgabe der Erfindung ist es ein optimiertes Verfahren anzugeben, wie in einem CAN-Netzwerk sowohl einzelne Knoten als auch Gruppen von Knoten gleichzeitig geweckt werden können.

### Vorteile der Erfindung

Die Erfindung geht aus von einem Verfahren und einer Vorrichtung zum Aufwecken von Teilnehmern eines CAN-Bussystems, wobei ein Erfassungsmittel vorgesehen ist, das wenigstens eine vorgegebene Signaleigenschaft der auf dem Bussystem übermittelten Signale erfasst und daraus der weitere Aufweckvorgang eingeleitet wird, dadurch gekennzeichnet, dass mindestens zwei Verläufe, Muster oder Abfolgen von einer der wenigstens einen Signaleigenschaft, insbesondere Muster definiert werden, wobei einer zum Aufwecken einer Gruppe und ein zweiter zum individuellen Aufwecken verwendet wird.

Vorteilhafter Weise wird als vorgegebene Signaleigenschaft eine Flanke oder ein Flankenwechsel des Signals vorgesehen.
Ebenso kann zweckmäßiger Weise als vorgegebene Signaleigenschaft ein Signalpegel oder eine bestimmte Kombination mehrerer Signalpegel vorgesehen sein.

Insbesondere vorteilhaft ist, dass beim Auftreten einer der wenigstens einen Signaleigenschaft eine Zeitdauer bestimmt wird und sich aus der so bestimmten Zeitdauer nach dem ersten Auftreten aus den Signaleigenschaften, bezogen auf die Zeitdauer, eine binäre Information ergibt, die ein selektives Aufwecken von Teilnehmern des Bussystems ermöglicht.

Dabei kann aus der gewonnenen Information der aufzuweckende Teilnehmer abgelesen werden, wobei dies durch Analyse der Nachricht oder Botschaft, die zum Verlassen des Sleep-Modus geführt hat, oder auch einer erneut gesendeten weiteren Wecknachricht oder Botschaft erfolgen kann.

Vorteilhafter Weise können die am Bus angeschlossenen Steuergeräte ihre Mikrocontroller ganz abschalten oder in einen Sleep-Modus mit ebenfalls abgeschaltetem Taktgeber bringen, wobei lediglich der am Bus angeschlossene Transceiver, insbesondere CAN-Transceiver geringster Leistungsaufnahme mit einer Stand-By-Stromversorgung versehen werden muss. Durch die erfindungsgemäße Verwendung der Zeitdauer, die beim Auftreten der Signaleigenschaft bestimmt wird, kann die Decodierung unabhängig von der verwendeten Übertragungsrate des Bussystems erfolgen, wobei sich durch die Auswertung auch zusätzlich noch Fehler im Blockaufbau bezogen auf die Kommunikationsblöcke im Bussystem erkennen lassen.

Besonders vorteilhaft ist, dass die Botschaft nach Einleitung des weiteren Aufweckvorgangs erneut gesendet wird und daraus ermittelt wird, welche Teilnehmer nun selektiv vollständig aufgeweckt werden sollen. Hierdurch können fehlerhafte Interpretationen von Botschaften als Weck-Botschaften wirksam vermieden werden. Es können aber auch beide Schritte des Weckvorganges im Zuge der Auswertung einer einzigen Botschaft durchlaufen werden.

Die Konfigurationsmöglichkeiten für das Weckverfahren über den CAN-Transceiver mit selektiver Wakeup-Funktion werden durch das erfindungsgemäße Verfahren erweitert, denn es wird nicht nur ein Muster konfiguriert, sondern mindestens zwei.

Der Vorteil dieses Verfahrens liegt darin, dass das Applikations-Programm mit einer einzigen CAN-Botschaft mehrere CAN-Knoten gleichzeitig aus dem Spar-Modus aufwecken kann. Das spart Zeit und Bandbreite auf dem CAN-Bus. Die Möglichkeit, einzelne CAN-Knoten aufzuwecken, bleibt erhalten.

Weitere Vorteile und vorteilhafte Ausgestaltungen ergeben sich aus der Beschreibung sowie den Merkmalen der Ansprüche.

### Zeichnung

Die Erfindung wird anhand der in der Zeichnung dargestellten Figuren näher erläutert.

Dabei zeigt
Figur 1 ein Bussystem mit mehreren, wenigstens zwei Teilnehmern.
Figur 2 zeigt einen erfindungsgemäßen Verfahrensablauf in Form eines Flussdiagramms.
In Figur 3 ist beispielhaft eine Nachricht mit der im Datenfeld eincodierten Weckinformation dargestellt.
Figur 4 schließlich zeigt den erfindungsgemäßen Aufbau eines Blocks im Datenfeld zur Ermittlung der Signaleigenschaft mit eincodierter Information.
Figur 5 zeigt beispielhaft die Aufteilung der eincodierten Weckinformation in Gruppen-Weckinformation sowie Einzel-Weckinformation

### Beschreibung der Ausführungsbeispiele

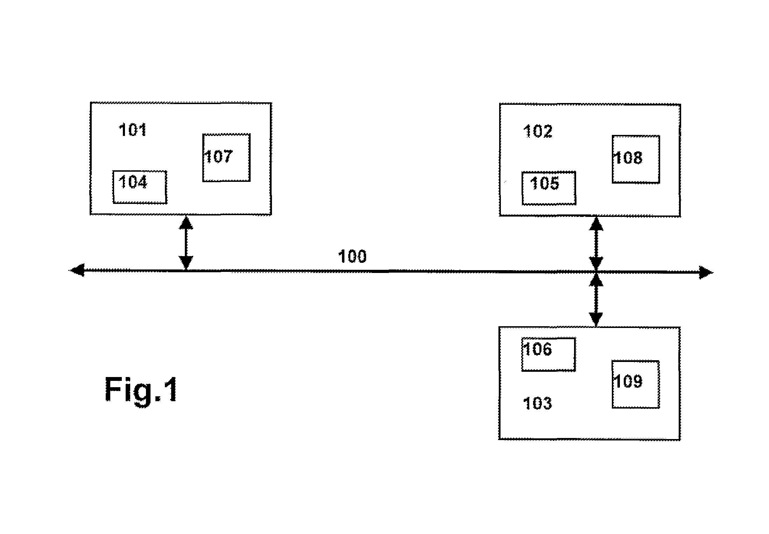

Figur 1 zeigt ein Bussystem 100 mit Busteilnehmern 101, 102 und 103. Diese enthalten jeweils einen Transceiver oder eine Medienanschlusseinheit 107, 108 bzw. 109 sowie einen Zeiterfassungs- bzw. Zählbaustein mit integriertem Taktgeber 104, 105 oder 106.
Dieser kann jeweils außerhalb des entsprechenden Transceivers oder der Medienanschlusseinheit liegen, aber auch als Bestandteil desselben ausgeprägt sein. Wie bereits erwähnt, sollen über den in Kraftfahrzeugen häufig verwendeten CAN-Bus in diesem Ausführungsbeispiel nur die Steuergeräte selektiv geweckt werden, die zur Erfüllung der benötigten Funktionen gebraucht werden. Dabei lassen sich auch Geräte zu Gruppen zusammenfassen, die auf die gleiche Weckinformation reagieren.

Eine Möglichkeit wäre, bestimmte Teile einer Botschaft/eines CAN-Frames (z. B. Identifier) zur Selektion zu verwenden. Dies setzt aber voraus, dass die Weckeinrichtung ständig mit einem in Betrieb befindlichen Taktgeber verbunden ist, der aber einen wesentlichen Teil zum Stromverbrauch beiträgt. Diese Art des Weckens bedingt, dass die Übertragungsrate des Busses bekannt ist und dass der Taktgeber nur sehr geringe Schwankungen durch äußere Einflüsse wie z. B. Versorgungsspannung oder Temperatur usw. haben darf. Die genaue Aufgabe besteht nun darin, ein Selektionsverfahren anzuwenden bzw. zu entwickeln, das mehrstufig arbeitet und in der ersten Stufe ohne in Betrieb befindlichen Taktgeber auskommt.

Die am Bus angeschlossenen Steuergeräte oder Teilnehmer im Ruhezustand, beispielsweise 102 und 103 können ihre Mikrocontroller ganz abschalten oder in einen Zustand mit abgeschaltetem Taktgeber bringen. Auch der Zeiterfassungs- bzw. Zählbaustein mit Taktgeber 105 beziehungsweise 106 wird in einen Sleep-Modus gebracht, in welchem der integrierte Taktgeber abgeschaltet ist. Lediglich der am Bus angeschlossene CAN-Transceiver bzw. die Medienanschlusseinheit geringster Leistungsaufnahme wird in den Teilnehmern im Ruhezustand, beispielsweise 102 und 103, mit einer Stand-By-Stromversorgung versehen.

Versendet ein Teilnehmer, beispielsweise 101, ein für das Aufwecken der Teilnehmer 102 und / oder 103 charakteristisches Signal auf dem Bus, wird der Selektionsmechanismus aktiviert. Im ersten Schritt wechseln die Teilnehmer 102 und 103 in den Spar-Modus und zählen Flanken des gesendeten Bussignals. Der Zeiterfassungs- bzw. Zählbaustein mit Taktgeber 105 bzw. 106 wird aktiviert. Abhängig vom Ergebnis der Flankenzählung erfolgt der Wechsel in den Zwischen-Modus. Im Zwischen-Modus wird unter Zuhilfenahme des Taktgebers 105 bzw. 106 der Inhalt des Datenfeldes dekodiert und mit einer abgelegten Weckadresse verglichen. Bei positivem Ergebnis wechselt der Teilnehmer in den aktiven Modus und es werden z. B. die Mikrocontroller und/oder weitere Spannungsregler der Teilnehmer 102 respektive 103 aktiviert.

Die Erfindung kann als einstufiges Weckkonzept, bei welchem beide Schritte des Verfahrens basierend auf der Auswertung einer einzigen empfangenen Botschaft durchlaufen werden. Es kann aber auch als zweistufiges Weckkonzept, bei welchem die beiden Schritte des Verfahrens basierend auf der Auswertung zweier nacheinander empfangener Botschaften durchlaufen werden, ausgeführt werden, um die Wecksicherheit weiter zu erhöhen.

Reagieren mehrere Geräte auf die gleichen Weckmechanismen oder auf die gleichen charakteristischen Signale, so lassen sich auch ganze Gerätegruppen wecken respektive die Geräte zu Gruppen zusammenfassen. Durch das erfindungsgemäße Vorgehen behält man gleichzeitig die Möglichkeit, auch spezielle Geräte für spezielle Anwendungen zu wecken.

Durch den Aufbau der Logik ist es möglich, die Informationen unabhängig von der verwendeten Übertragungsrate auf der Botschaft zu entnehmen, wie später noch näher erläutert wird. Dabei ist die Anzahl der Wechsel zwischen High und Low oder 0 und 1, also der binären Information, weitgehend konstant.

Besonders bevorzugt ist, dass die weckende Botschaft eine nach der CAN-Bus-ISO-Norm aufgebaute Nachricht ist, die diese Norm nicht verletzt und somit in vorhandenen Systemen keine Probleme hervorruft. Ein CAN-Controller, wie er bei anderen Lösungen verwendet wird, ist hier dann nicht nötig.

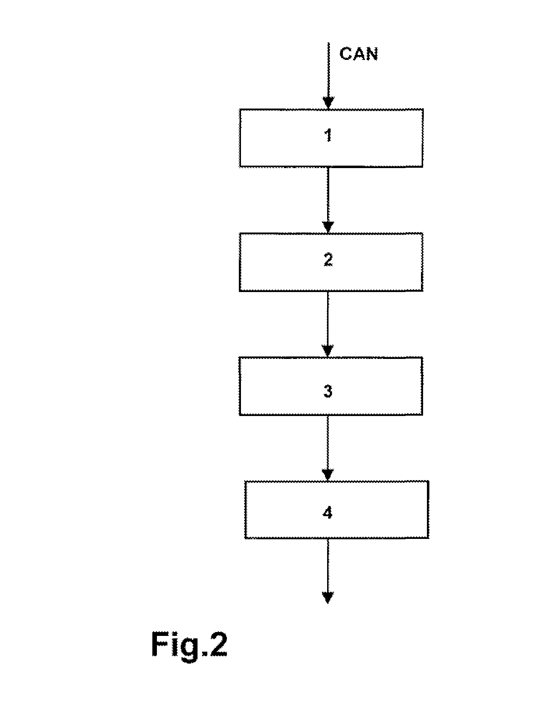

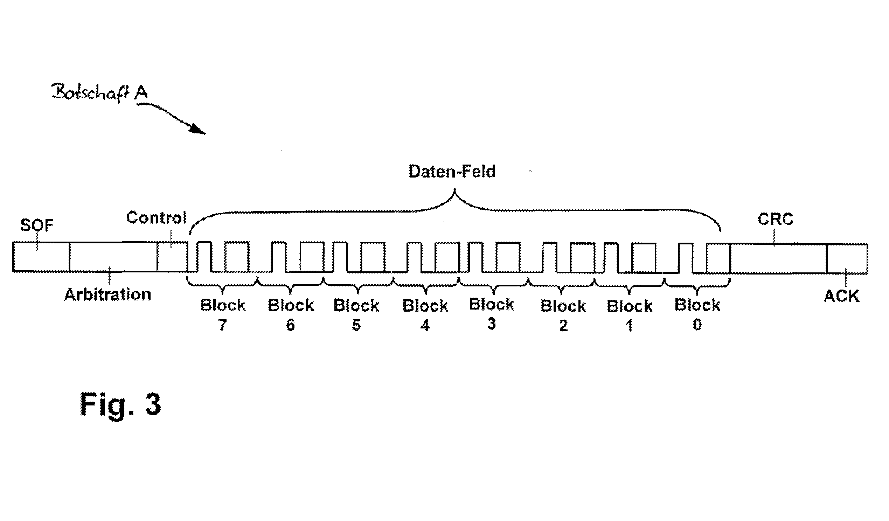

In Figur 2 ist der prinzipielle Ablaufplan als ein Beispiel dargestellt. Der Sender der Weckanforderung schickt eine Botschaft A entsprechend Figur 3, in der der zu weckende Empfänger oder die Empfängergruppe mit einer Nummer eincodiert ist, auf den Bus, wie hier im Beispiel einem CAN-Bus. Im Ruhezustand ist der Bus rezessiv. Wenn die erste Nachricht kommt, was sich am Wechsel auf dominant erkennen lässt und in Block 1 von Figur 2 geschieht, wird ein Zähler aktiviert. Parallel wird der Taktgeber des Zeiterfassungs- bzw. Zählbausteins 105 bzw. 106 gestartet. Über eine bestimmte Zeit, die durch mehrere Faktoren beeinflusst wird, werden dann die Anzahl der Flanken oder auch der Signalpegel der Nachricht in Block 2 der Figur 2 gezählt. Liegt diese Anzahl innerhalb der zulässigen Grenzen, wird der zweite Teil der Schaltung aktiviert. Dadurch wird eine erste Trennung von Kommunikation bzw. Störung auf dem Bus und einer Weckanforderung erreicht. Fällt dieser Vergleich positiv aus, handelt es sich also um eine Weckanforderung, wird die zweite Stufe der Logik mit Strom versorgt. Der Sender schickt nun ein zweites Mal die Botschaft A entsprechend Figur 3. Aus dieser liest die Wake-Up-Logik, also insbesondere die verarbeitende Einheit unter Nutzung des Zeiterfassungs- bzw. Zählbausteins 105 bzw. 106 aus dem Data-Field gemäß dem weiter unten geschilderten Verfahren die Nummer des Gerätes oder der Gerätegruppe aus, die geweckt werden soll. Dies erfolgt in Block 3 der Figur 2. Stimmt die ausgelesene Nummer mit einer gespeicherten überein, so wird das Gerät über Aktivieren der Spannungsregler oder Wecken des Mikrocontrollers in Block 4 von Figur 2 aktiviert und der entsprechende Teilnehmer nimmt am Busverkehr teil. Nach dem erfindungsgemäße Verfahren kann dies nur für einen einzelnen Teilnehmer, aber auch für eine Gruppe von Teilnehmern der Fall sein, so dass in letzterem Fall mit einer Weckbotschaft mehrere Teilnehmer aufgeweckt werden. In diesem Flussdiagramm ist das zweistufige Weckverfahren mit der Kombination der Blöcke 2 und 3, wie oben beschrieben, dargestellt. Ebenso ist es möglich, auch nur eine der beiden Stufen als Weckkriterium zu benutzen.

Entsprechend Figur 3 ist die Botschaft A in einer bevorzugten Form als CAN-Bus-ISO-Norm aufgebaute Botschaft eingesetzt. Dabei ist ein Start of Frame, SOF, ein Abitration-Feld, das in der Regel den Identifier enthält, und ein Kontrollfeld vor dem Datenfeld vorgesehen. Im Anschluss an das Datenfeld ist eine Prüfziffer als Cyclic-Redundancy-Check CRC und ein Bestätigungsfeld bezüglich der Nachrichtenübertragung, ein Acknowledgement ACK enthalten. Die Botschaft A enthält die Nummer des Gerätes oder der Gerätegruppe im Datenfeld. Als CAN-Identifier kann die Wake-Up-ID, also entsprechend der CAN-Spezifikation 2.0rrr rrrd rrrr, wobei r rezessiv und d dominant bedeutet, verwendet werden. Es kann aber auch eine andere Botschaftsadresse für die Weckbotschaft festgelegt werden. Damit entspricht der Rahmen oder das Frame der CAN-Bus-Spezifikation, und die Kommunikation anderer Geräte über den CAN-Bus wird nicht gestört.

Das gesamte Datenfeld, wie in Figur 3 dargestellt, im Rahmen insbesondere im CAN-Frame besteht hier aus 64Bit, unterteilt in 8 Blöcke, also Block 0 bis Block 7. In jedem Block ist dabei wenigstens 1Bit der Gerätenummer eincodiert. Ist in jedem Block dabei genau 1Bit der Gerätenummer eincodiert, kann die Schaltung aus einem CAN-Frame, wie dargestellt, 8Bits für die weitere Verarbeitung gewinnen. Durch die Verschachtelung dieser 8Bits können Fehler in der Übertragung erkannt werden.

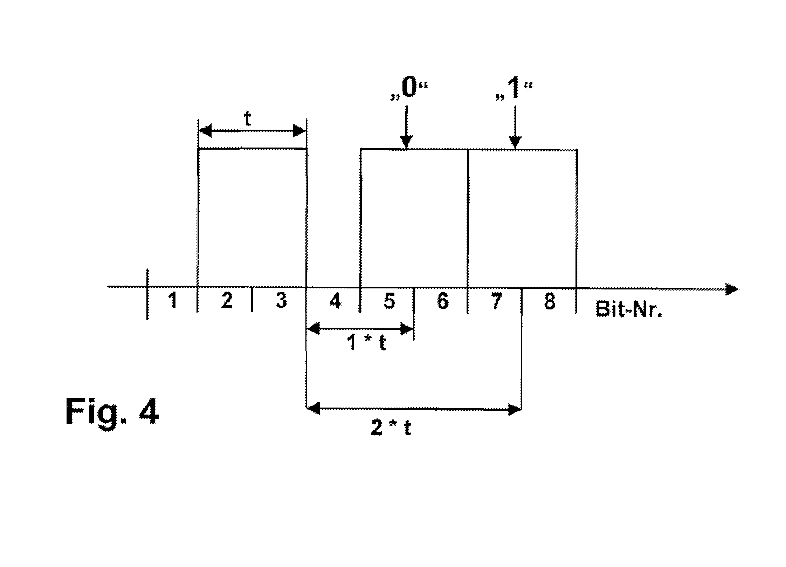

Der besondere Aufbau der einzelnen Blöcke 0 bis 7 aus Figur 3 ist in Figur 4 dargestellt. Durch diesen besonderen Aufbau der 8 Blöcke kann die Codierung unabhängig von der verwendeten Übertragungsrate des Busses erfolgen. Zusätzlich lassen sich noch Fehler im Blockaufbau erkennen. Dabei entspricht ein Block 8Bits aus dem CAN-Datenfeld.

Der Aufbau eines Blocks ist beispielhaft in Figur 4 dargestellt. Dabei sind die Bits 2 und 3 auf High, um eine Zeit t zu messen bzw. zu bestimmen. Nach dem Ende von Bit 3 wartet die Wake-Up-Logik oder die Verarbeitungseinheit, die vorab bestimmte Zeit t einmal ab und speichert den Zustand, der dann auftritt, wartet noch einmal die Zeit t ab und speichert wieder den dann auftretenden erneuten Zustand. Dabei kann die Zeit t und 2t, wie in Figur 4 dargestellt, so gewählt werden, dass voll High- oder Low-Signal im Rahmen der Signalpegel erkannt werden können. Gleichermaßen ist eine Erkennung der Signalflanken, beispielsweise von Bit 4 auf Bit 5 und Bit 6 auf Bit 7 durch entsprechende Wahl der jeweiligen Zeitabschnitte denkbar. Damit ergibt sich unabhängig von der verwendeten Übertragungsrate eine Codierungsmöglichkeit für eine 0-Information, hier in Bit 5 und 6 sowie eine 1-Information, hier über Bit 7 und 8.

D. h. in der beispielhaften Codierung in Figur 4 ist Bit 1 immer 0, Bit 2 und Bit 3 sind immer 1, zum Einmessen der Zeit t, Bit 4 ist wiederum immer 0 zur Trennung zwischen der Einmesszeit und der eigentlichen binären Information. Bit 5 und 6 sind hier so gewählt, dass diese auf High sind, was dann für den Block eine logische 0 bedeutet. Bit 7 und 8 sind dann so gewählt, was für den Block eine logische 1 bedeuten würde. D. h. sind Bit 5 und 6 auf 1, enthält der Block eine logische 0, und sind Bit 7 und 8 auf 1, so enthält der Block eine logische 1. D. h. die Bits werden hier so gesetzt, dass entweder die Bits 5 und 6 auf 1 sind oder die Bits 7 und 8. D. h. das hier genannte Verfahren zeigt eine baudrahtenunabhängige Übertragung, insbesondere durch Zählen von Flanken oder Flankenwechseln respektive der entsprechende Signalpegel gemäß der jeweils vorgegebenen Signaleigenschaft; zum Einen als erste Weckstufe und bei der Auswertung der eincodierten binären Information in derselben oder einer erneut gesendeten Botschaft als zweite, selektive Weckstufe in einem mehrstufigen Konzept. Die vorgegebene Signaleigenschaft kann dabei, wie bereits erwähnt, zum Einen der Signalpegel, also 0 oder 1 wie im Beispiel der Figur 4 sein, aber auch, wie bereits dargelegt, die Auswertung der Signalflanken oder des Signalflankenwechsels. Damit ergibt sich eine einfache Möglichkeit, Steuergeräte selektiv zu wecken, ohne zusätzlichen Leitungsaufwand zu haben und ohne immer alle auch nicht benötigte Teilnehmer des Bussystems in die Stromaufnahme zu bringen.

Die Konfigurationsmöglichkeiten für den CAN-Transceiver mit selektiver Wakeup-Funktion werden durch die vorliegende Erfindung dahingehend erweitert, dass nicht nur ein Muster konfiguriert wird, sondern mindestens zwei. Ein Muster dient zum individuellen Wecken eines einzelnen Teilnehmers, das oder die weiteren Muster zum Wecken von Gruppen von Teilnehmern. Durch geeignete Auswahl der konfigurierten Muster kann es bewerkstelligt werden, dass nicht alle Weckmuster separat abgelegt bzw. konfiguriert werden müssen.

Der Vorteil dieses Verfahrens liegt darin, dass das Applikations-Programm mit einer einzigen CAN-Botschaft mehrere CAN-Knoten gleichzeitig aus dem Spar-Modus aufwecken kann. Das spart Zeit und Bandbreite auf dem CAN-Bus. Die Möglichkeit, einzelne CAN-Knoten aufzuwecken, bleibt durch das zweite Muster erhalten.

Es gibt im Wesentlichen vier Möglichkeiten, ICs wie beispielsweise CAN-Transceiver entsprechend einer Wakeup-Funktionalität zu konfigurieren:
1. Feste Codierung im IC (ROM)
2. Flüchtiger Speicher, der nach jedem Einschalten von außen neu gesetzt werden muss (z.B. per SPI)
3. Nicht flüchtiger Speicher, der bei Band-Ende programmiert wird (EPROM, EEPROM, Flash)
4. Bit-Zapping, einzelne Bits werden per Fuse/Antifuse Technik bei Band-Ende dauerhaft gesetzt

Version 1 eignet sich bei sehr hohen Stückzahlen für jede einzelne Codierung.
Version 2 erfordert ein eigenes Programmier-Interface.
Version 3 verursacht höhere Kosten (zusätzliche Prozess-Schritte) in der Produktion. Version 4 kann für wenige Bits angewendet werden.

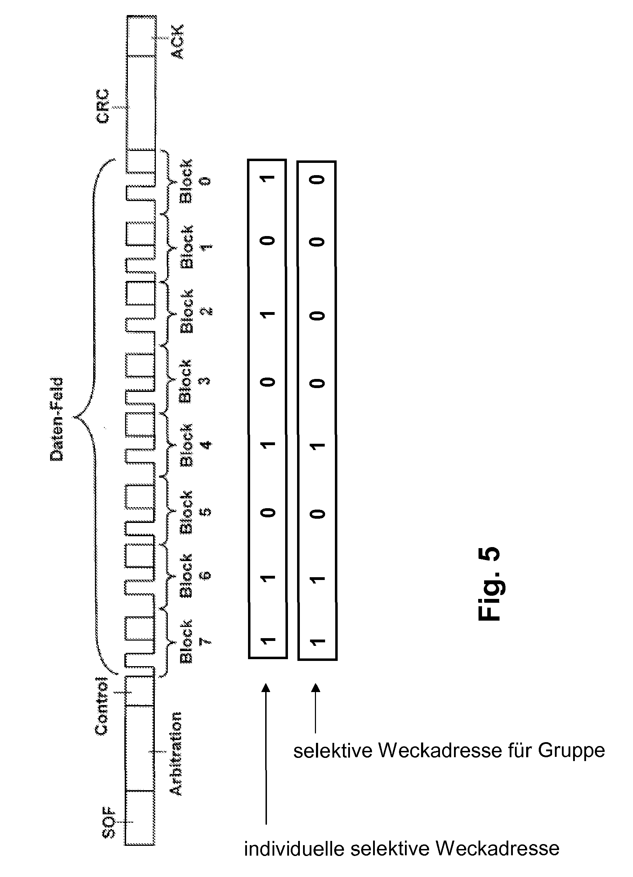

Wenn mehrere CAN-Knoten mit dem gleichen Weck-Muster konfiguriert werden, können diese CAN-Knoten gleichzeitig aufgeweckt werden, aber nicht einzeln. Daher ist es sinnvoll, ein alternatives Weck-Muster zu ermöglichen. Dann kann jeder CAN-Knoten ein separates Weck-Muster haben; Gruppen von CAN-Knoten verwenden dasselbe alternative Weck-Muster, mit diesem können sie zeitgleich geweckt werden. Ein Beispiel ist im folgenden ausgeführt und in Figur 5 dargestellt.

Um Konfigurations-Bits einzusparen (insbesondere für die Zapping-Konfiguration) werden die alternativen Weck-Muster besonders kodiert, z.B. werden n Bits des Weck-Musters ausgewählt um (2ⁿ -1) separate Weck-Muster und ein Gruppen-Weck-Muster zu definieren. Die restlichen (8-n) Bits des Weck-Musters sind für Knoten dieser Weck-Gruppe gleich. Wenn also eine Weck-Gruppe aus z.B. sieben CAN-Knoten bestehen soll, werden z.B. die drei letzten Bits des Weck-Musters verwendet, um einzelne Knoten separat aufzuwecken. Mit drei bit ergeben sich 8 Kombinationen. Beispielsweise werden mit den Kombinationen 1-7 die Mitglieder der Weck-Gruppe separat aufgeweckt, mit der Kombination 0 werden alle gleichzeitig aufgeweckt. Damit existiert für jeden Knoten sowohl ein separates als auch ein alternatives Weck-Muster, ohne dass zusätzlich Konfigurations-Bits notwendig werden. Die geschilderte, in dem in Figur 5 dargestellten Beispiel gewählte Wahl der Weck-Muster ermöglicht es, sich auf die Einstellung des individuellen, selektiven Wakeup-Musters bei der Konfiguration, beispielsweise per Bit-Zapping, zu beschränken. Empfängt der Teilnehmer sein individuelles Weckmuster, im dargestellten Beispiel 11010101, oder empfängt er dessen erste fünf Bits mit drei nachfolgenden logischen Nullen, also 11010000, so wird er aufgeweckt. Das für die Gruppe gültige Wakeup-Muster ist auf diese Weise implizit mit abgelegt.

Andere Kodierungen und andere Größen von Weck-Gruppen sich natürlich ebenfalls möglich.

Die hier beschriebenen CAN-Transceiver können für CAN und/oder für TTCAN Netzwerke verwendet werden.

## Patentansprüche

1. Vorrichtung zum Aufwecken von Teilnehmern (101,102,103) eines CAN-Bussystems (100), wobei ein Erfassungsmittel (104,105,106) vorgesehen ist, das wenigstens eine vorgegebene Signaleigenschaft der auf dem Bussystem übermittelten Signale erfasst und abhängig vom Verhalten der wenigstens einen erfassten Signaleigenschaft der weitere Aufweckvorgang eingeleitet wird, **dadurch gekennzeichnet, dass** mindestens zwei Verläufe, Muster oder Abfolgen von einer der wenigstens einen Signaleigenschaft definiert werden, wobei ein Verlauf oder Muster oder eine Abfolge zum Aufwecken einer Gruppe von Teilnehmern und ein zweiter Verlauf oder ein zweites Muster oder eine zweite Abfolge zum individuellen Aufwecken eines Teilnehmers verwendet wird.

2. Vorrichtung nach Anspruch 1, **dadurch gekennzeichnet, dass** als eine vorgegebene Signaleigenschaft eine Flanke oder ein Flankenwechsel des Signals erfasst wird.

3. Vorrichtung nach Anspruch 1, **dadurch gekennzeichnet, dass** als eine vorgegebene Signaleigenschaft ein Signalpegel oder eine bestimmte Kombination mehrerer Signalpegel erfasst wird.

4. Vorrichtung nach einem der Ansprüche 1 bis 3, **dadurch gekennzeichnet, dass** ein Zähler zumindest zum Zählen des Auftretens einer der wenigstens einen Signaleigenschaft vorgesehen ist.

5. Vorrichtung nach einem der Ansprüche 1 bis 3, **dadurch gekennzeichnet, dass** ein Zähler oder Timer zumindest zum Erfassen der Zeitdauer zwischen Auftretenszeitpunkten von erfassten Signaleigenschaften vorgesehen ist.

6. Vorrichtung nach einem der vorangegangenen Ansprüche, **dadurch gekennzeichnet, dass** der oder die für den weiteren Aufweckvorgang verwendeten Verläufe, Muster oder Abfolgen der wenigstens einen Signaleigenschaft in einem hierfür vorgesehenen Speicher abgelegt werden.

7. Verfahren zum Aufwecken von Teilnehmern eines CAN-Bussystems, wobei ein Erfassungsmittel vorgesehen ist, das wenigstens eine vorgegebene Signaleigenschaft der auf dem Bussystem übermittelten Signale erfasst und abhängig vom Verhalten der wenigstens einen erfassten Signaleigenschaft der weitere Aufweckvorgang eingeleitet wird, **dadurch gekennzeichnet, dass** mindestens zwei Verläufe, Muster oder Abfolgen von einer der wenigstens einen Signaleigenschaft definiert werden, wobei ein Verlauf oder Muster oder eine Abfolge zum Aufwecken einer Gruppe von Teilnehmern und ein zweiter Verlauf oder ein zweites Muster oder eine zweite Abfolge zum individuellen Aufwecken eines Teilnehmers verwendet wird.

8. Verfahren nach Anspruch 7, **dadurch gekennzeichnet, dass** eine beliebige Botschaft gesendet wird und diese als Aufweckbotschaft ausgewertet wird, indem aus der Botschaft eine oder mehrere der wenigstens einen Signaleigenschaft erfasst und ausgewertet werden.

9. Verfahren nach Anspruch 8, **dadurch gekennzeichnet, dass** eine der wenigstens einen Signaleigenschaft durch einen Zähler gezählt und mit mindestens einem Schwellwert oder Grenzwert verglichen wird und abhängig vom Ergebnis des Vergleiches der Weckvorgang eingeleitet beziehungsweise durchgeführt wird.

10. Verfahren nach Anspruch 7, **dadurch gekennzeichnet, dass** beim Auftreten einer der wenigstens einen Signaleigenschaft eine Zeitdauer bestimmt wird.

11. Verfahren nach Anspruch 10, **dadurch gekennzeichnet, dass** aus dem Wert einer der mindestens einen Signaleigenschaft nach wenigstens einmaligem erneutem Ablauf der zuvor ermittelten Zeitdauer eine binäre Information ermittelt wird, dass aus mehreren der auf diese Weise ermittelten binären Informationen ein Verlauf oder eine Abfolge oder ein Muster einer Signaleigenschaft erstellt wird und mit mindestens einem abgelegten Verlauf oder einer abgelegten Abfolge oder einem abgelegten Muster verglichen wird, und dass abhängig vom Ergebnis des Vergleichs der Weckvorgang eingeleitet beziehungsweise durchgeführt wird oder nicht.

12. Verfahren nach Anspruch 7, **dadurch gekennzeichnet, dass** in einem ersten Schritt eine der wenigstens einen Signaleigenschaft durch einen Zähler gezählt und mit mindestens einem Schwellwert oder Grenzwert verglichen wird und abhängig vom Ergebnis des ersten Vergleiches der zweite Schritt des Weckvorgangs eingeleitet wird, und dass in einem zweiten Schritt aus dem Wert einer der mindestens einen Signaleigenschaft eine Zeitdauer ermittelt wird, und nach wenigstens einmaligem erneutem Ablauf der ermittelten Zeitdauer eine binäre Information ermittelt wird, dass aus mehreren der auf diese Weise ermittelten binären Informationen ein Verlauf oder eine Abfolge oder ein Muster einer Signaleigenschaft erstellt wird und mit mindestens einem abgelegten Verlauf oder einer abgelegten Abfolge oder einem abgelegten Muster verglichen wird, und dass abhängig vom Ergebnis des zweiten Vergleichs der Weckvorgang durchgeführt wird oder nicht.

13. Verfahren nach einem der Ansprüche 7 bis 12, **dadurch gekennzeichnet, dass** Aufweckbotschaften mehrfach versendet werden und dass eine im Ruhezustand empfangene Botschaft als Aufweckbotschaft ausgewertet wird und nach Einleitung des weiteren Aufweckvorganges auf einen erneuten Empfang der Aufweckbotschaft gewartet wird und nach erneutem Empfang der zweite, für einzelne Teilnehmer oder Gruppen von Teilnehmern selektive Schritt des Aufweckverfahrens durchgeführt wird.

14. Verfahren nach einem der Ansprüche 7 bis 12, **dadurch gekennzeichnet, dass** eine im Ruhezustand empfangene Botschaft als Aufweckbotschaft ausgewertet wird, wobei der erste Schritt des Aufweckverfahrens und der zweite, für einzelne Teilnehmer oder Gruppen von Teilnehmern selektive Schritt des Aufweckverfahrens durch Auswertung derselben, einmalig empfangenen Botschaft durchgeführt werden.

15. Teilnehmer eines Bussystems mit einer Vorrichtung gemäß einem der Ansprüche 1 bis 6.

## Claims

1. Apparatus for waking subscribers (101, 102, 103) in a CAN bus system (100), wherein a sensing means (104, 105, 106) is provided that senses at least one prescribed signal property of the signals transmitted on the bus system and takes the response of the at least one sensed signal property as a basis for initiating the further waking process, **characterized in that** at least two profiles, patterns or sequences for one of the at least one signal property are defined, wherein one profile, pattern or sequence is used to wake a group of subscribers and a second profile or a second pattern or a second sequence is used to wake a subscriber individually.

2. Apparatus according to Claim 1, **characterized in that** an edge or an edge change of the signal is sensed as a prescribed signal property.

3. Apparatus according to Claim 1, **characterized in that** a signal level or a particular combination of a plurality of signal levels is sensed as a prescribed signal property.

4. Apparatus according to one of Claims 1 to 3, **characterized in that** a counter is provided at least for counting the occurrence of one of the at least one signal properties.

5. Apparatus according to one of Claims 1 to 3, **characterized in that** a counter or timer is provided at least for sensing the period of time between instants of occurrence of sensed signal properties.

6. Apparatus according to one of the preceding claims, **characterized in that** the profile(s), pattern(s) or sequence(s) of the at least one signal property that are used for the further waking process are stored in a memory provided for this purpose.

7. Method for waking subscribers in a CAN bus system, wherein a sensing means is provided that senses at least one prescribed signal property of the signals transmitted on the bus system takes the response of the at least one sensed signal property as a basis for initiating the further waking process, **characterized in that** at least two profiles, patterns or sequences for one of the at least one signal property are defined, wherein one profile, pattern or sequence is used to wake a group of subscribers and a second profile or a second pattern or a second sequence is used to wake a subscriber individually.

8. Method according to Claim 7, **characterized in that** an arbitrary message is sent and said message is evaluated as a waking message by virtue of one or more of the at least one signal properties being sensed and evaluated from the message.

9. Method according to Claim 8, **characterized in that** one of the at least one signal properties is counted by a counter and is compared with at least one threshold value or limit value, and the result of the comparison is taken as a basis for initiating and performing the waking process.

10. Method according to Claim 7, **characterized in that** the occurrence of one of the at least one signal properties prompts determination of a period of time.

11. Method according to Claim 10, **characterized in that** a piece of binary information is ascertained from the value of one of the at least one signal properties after the previously ascertained period of time has elapsed again at least once, **in that** a profile or a sequence or a pattern for a signal property is produced from a plurality of the pieces of binary information ascertained in this manner and is compared with at least one stored profile or one stored sequence or one stored pattern, and **in that** the result of the comparison is taken as a basis for initiating and performing or not initiating and performing the waking process.

12. Method according to Claim 7, **characterized in that** a first step involves one of the at least one signal properties being counted by a counter and being compared with at least one threshold value or limit value, and the result of the first comparison being taken as a basis for initiating the second step of the waking process, and **in that** a second step involves a period of time being ascertained from the value of one of the at least one signal properties, and a piece of binary information being ascertained after the ascertained period of time has elapsed again at least once, **in that** a profile or a sequence or a pattern for a signal property is produced from a plurality of the pieces of binary information ascertained in this manner and is compared with at least one stored profile or one stored sequence or one stored pattern, and **in that** the result of the second comparison is taken as a basis for performing or not performing the waking process.

13. Method according to one of Claims 7 to 12, **characterized in that** waking messages are sent repeatedly and **in that** a message received in the quiescent state is evaluated as a waking message and initiation of the further waking process is followed by a wait for fresh reception of the waking message, and fresh reception is followed by the second step of the waking method, which second step is selective for individual subscribers or groups of subscribers, being performed.

14. Method according to one of Claims 7 to 12, **characterized in that** a message received in the quiescent state is evaluated as a waking message, wherein the first step of the waking method and the second step of the waking method, which second step is selective for individual subscribers or groups of subscribers, are performed by evaluating the same message received once.

15. Subscriber in a bus system having an apparatus according to one of Claims 1 to 6.

## Revendications

1. Dispositif de réveil de participants (101, 102, 103) d'un système de bus CAN (100), qui présente un moyen de saisie (104, 105, 106) qui saisit au moins une propriété prédéterminée de signaux transmis sur le système de bus et, en fonction du comportement de l'au moins une propriété saisie du signal, la poursuite de l'opération de réveil est lancée, **caractérisé en ce qu'**au moins deux évolutions, motifs ou successions sont défini(e)s par l'une parmi la ou les propriétés du signal, une évolution ou un motif ou une succession étant utilisé (e) pour le réveil d'un groupe de participants et une deuxième évolution ou un deuxième motif ou une deuxième succession étant utilisé(e) pour le réveil individuel d'un participant.

2. Dispositif selon la revendication 1, **caractérisé en ce que** la propriété prédéterminée du signal qui est saisie est un flanc ou un changement de flanc du signal.

3. Dispositif selon la revendication 1, **caractérisé en ce que** la propriété prédéterminée du signal qui est saisie est le niveau du signal ou une combinaison définie de plusieurs niveaux du signal.

4. Dispositif selon l'une des revendications 1 à 3, **caractérisé en ce qu'**un compteur est prévu au moins pour compter l'apparition d'une parmi la ou les propriétés du signal.

5. Dispositif selon l'une des revendications 1 à 3, **caractérisé en ce qu'**un compteur ou une horloge sont prévus au moins pour détecter la durée qui s'écoule entre des instants d'apparition des propriétés saisies du signal.

6. Dispositif selon l'une des revendications précédentes, **caractérisé en ce que** l'évolution/les évolutions, le motif/les motifs ou la succession/les successions, utilisé(e)(s) pour la poursuite de l'opération de réveil, de l'au moins une propriété du signal est/sont conservé(e)(s) dans une mémoire prévue dans ce but.

7. Procédé de réveil de participants à un système de bus CAN, qui présente un moyen de saisie qui saisit au moins une propriété prédéterminée des signaux transmis sur le système de bus et, en fonction du comportement de l'au moins une propriété saisie du signal, la poursuite de l'opération de réveil est lancée, **caractérisé en ce qu'**au moins deux évolutions, motifs ou successions sont défini(e)s par l'une parmi la ou les propriétés du signal, une évolution ou un motif ou une succession étant utilisé(e) pour le réveil d'un groupe de participants et une deuxième évolution ou un deuxième motif ou une deuxième succession étant utilisé(e) pour le réveil individuel d'un participant.

8. Procédé selon la revendication 7, **caractérisé en ce qu'**un message quelconque est envoyé et **en ce que** ce dernier est évalué comme message de réveil en saisissant et en évaluant dans le message une ou plusieurs parmi la ou les propriétés du signal.

9. Procédé selon la revendication 8, **caractérisé en ce que** l'une parmi la ou les propriétés du signal est comptée par un compteur et est comparée à au moins une valeur de seuil ou une valeur limite, l'opération de réveil étant lancée ou exécutée selon le résultat de la comparaison.

10. Procédé selon la revendication 7, **caractérisé en ce qu'**une durée est déterminée lors de l'apparition de l'une parmi la ou les propriétés du signal.

11. Procédé selon la revendication 10, **caractérisé en ce qu'**à partir de la valeur de la ou d'une des propriétés du signal une information binaire est déterminée après au moins un renouvellement de la durée déterminée précédemment, **en ce qu'**à partir de plusieurs de ces informations binaires, une succession ou un motif d'une propriété du signal sont déterminés et comparés à au moins une succession ou un motif conservés en mémoire et **en ce que** l'opération de réveil est lancée et exécutée ou non en fonction du résultat de la comparaison.

12. Procédé selon la revendication 7, **caractérisé en ce que** dans une première étape, une parmi la ou les propriétés du signal est comptée par un compteur et est comparée à au moins une valeur de seuil ou une valeur limite, et **en ce qu'**en fonction du résultat de la première comparaison, la deuxième étape de l'opération de réveil est lancée et **en ce que** dans une deuxième étape, à partir de la valeur d'une parmi la ou les propriétés du signal, une durée est déterminée et **en ce qu'**après au moins une répétition de la durée déterminée, une information binaire est déterminée, **en ce que** plusieurs des informations binaires ainsi déterminées, une évolution, une succession ou un motif d'une propriété du signal est déterminé et comparé à au moins une évolution, une succession ou un motif conservé en mémoire et **en ce qu'**en fonction du résultat de la deuxième comparaison, l'opération de réveil est exécutée ou non.

13. Procédé selon l'une des revendications 7 à 12, **caractérisé en ce que** des messages de réveil sont envoyés plusieurs fois et **en ce qu'**un message reçu à l'état de repos est évalué comme étant un message de réveil, et le lancement de la poursuite de l'opération de réveil est suivi d'une attente d'une nouvelle réception du message de réveil et après la nouvelle réception, la deuxième étape du procédé de réveil est exécutée sélectivement pour certains participants ou groupes de participants.

14. Procédé selon l'une des revendications 7 à 12, **caractérisé en ce qu'**un message reçu à l'état de repos est évalué comme étant un message de réveil, la première étape du procédé de réveil et la deuxième étape, exécutée pour tous les participants ou sélectivement pour certains groupes de participants, du procédé de réveil sont exécutées par évaluation du même message reçu une fois.

15. Participant à un système de bus présentant un dispositif selon l'une des revendications 1 à 6.
